# EUROPEAN PATENT APPLICATION

(11) **EP 4 582 160 A1**
(43) Date of publication of application: **09.07.2025**
(21) Application number: 23860486.2
(22) Date of filing: 31.08.2023
(51) Int. Cl.: B01D 3/14, B01D 3/42

(54) **DISTILLATION DEVICE AND DISTILLATION METHOD**

(30) Priority: 02.09.2022 JP 2022139903
(71) Applicant: Toyo Engineering Corporation, Chiba-shi, Chiba 261-8601 (JP)
(72) Inventor: WAKABAYASHI, Toshihiro, Chiba-shi, Chiba 261-8601 (JP); OTOMO, Yohei, Chiba-shi, Chiba 261-8601 (JP); TOGO, Masaki, Chiba-shi, Chiba 261-8601 (JP)
(74) Representative: Reich, Jochen
(86) International application number: PCT/JP2023/031827
(87) International publication number: WO 2024/048724

(57) **Abstract**

A distillation device includes a batch type distillation column, a reboiler that heats and vaporizes liquid, which is a process fluid supplied to the distillation column, into vapor, a displacement compressor that draws in fluid for heating the liquid and increases the fluid in pressure and temperature, and supplies the fluid to the reboiler, a condenser that condenses overhead vapor of the distillation column into a condensate, a distillate withdrawal portion that removes the condensate condensed by the condenser, and a discharged liquid withdrawal portion that removes residual liquid from the distillation column. The compressor includes an actual volume flow rate regulation mechanism that varies an actual volume flow rate of the fluid, which is increased in pressure and temperature by the compressor, in accordance with a change in a required heating temperature of the reboiler during operation of the distillation device.

## Description

### TECHNICAL FIELD

The present invention relates to a distillation device and distillation method.

### BACKGROUND ART

Patent Literature 1 describes a distillation device that includes a distillation column, a reboiler, a compressor, and a condenser. In the description, the liquid supplied to the distillation column is hydrous ethanol containing trace methanol.

The distillation device of Patent Literature 1 includes an indirect heat pump that uses water as working fluid (refrigerant). In the indirect heat pump, water vapor, increased in pressure and temperature by the compressor, is supplied to the condenser (reboiler of distillation device). The temperature of the water vapor supplied to the condenser (reboiler of distillation device) is set to be higher than the temperature of the hydrous ethanol at the bottom of the distillation column. Thus, the water vapor entering the condenser (reboiler of distillation device) transfers heat to the hydrous ethanol and condenses. The condensed water is delivered to an evaporator (condenser of distillation device). The heating performed with the condenser (reboiler of distillation device) discharges contaminated alcohol vapor out of the overhead of the distillation column. The discharged contaminated alcohol vapor is delivered to the evaporator (condenser of distillation device). The temperature of the water delivered to the evaporator (condenser of distillation device) is set to be lower than the temperature of the contaminated alcohol vapor. Thus, the contaminated alcohol vapor condenses as it transfers heat to the water and most of the contaminated alcohol vapor returns through a pipe to the distillation column. Part of the condensed overhead vapor is removed as a contaminated alcohol liquid. The hydrous ethanol from which methanol is eliminated is discharged out of the bottom section of the distillation column.

### CITATION LIST

### Patent Literature

Patent Literature 1: Japanese Laid-Open Patent Publication No. 60-168501

### SUMMARY OF INVENTION

### Technical Problem

Distillation devices, such as that of Patent Literature 1, include a batch distillation device and a continuous distillation device. In a batch distillation device, the liquid of the processed subject is delivered to the distillation column and then distilled. Thus, in the batch distillation device, the amount of liquid in the distillation column decreases as distillation progresses.

In the batch distillation device, as distillation progresses, a large amount of liquid that is unlikely to be vaporized in other words, a large amount of liquid having a higher boiling point remains in the distillation column. Thus, as the distillation progresses, the reboiler must increase the temperature for heating.

The compressor used in the distillation device of, for example, Patent Literature 1 is usually of a centrifugal type. A centrifugal compressor is suited for increasing the pressure and the temperature in a generally constant manner under a condition in which the flow rate of fluid is generally constant. More specifically, the centrifugal compressor is designed so that an impeller has a specific shape that is in accordance with the components and flow rate of a fluid at the designed point. A heat pump distillation system may be applied to a system in which the heating temperature required for the reboiler changes over a wide range. In this case, the compression ratio of the compressor may be set so that the temperature pumping range of heat at the heat pump covers the entire changing range for the required heating temperature of the reboiler. Further, the compression ratio of the compressor may be set by increasing the suction pressure of the compressor in a manner suitable for changes in the required heating temperature of the reboiler to increase the discharge pressure and temperature of the compressor. This allows the temperature pumping range, namely, the compression ratio, to be narrower than when the compression ratio of the compressor is set so that the temperature pumping range of the heat pump covers the entire changing range of the required heating temperature of the reboiler. Under such setting, however, the increased pressure of the fluid drawn into the compressor increases the density of the fluid. Thus, the actual volume flow rate becomes less than the designed actual volume flow rate. As a result, the inlet actual volume flow rate may be excluded from the range that allows for normal operation of the centrifugal compressor. When the designed point of the lower limit of the range of the inlet actual volume flow rate allowing for normal operation of a typical centrifugal compressor is 100%, the lower limit will be, for example, 80%. Even when the designed point of the flow rate of the fluid drawn into the compressor becomes less than or equal to 80% of the designed point, the distillation device must perform a circulation operation with a kickback line so that the actual volume flow rate of the intake processed by the compressor can be maintained at 80 % of the designed point. Thus, the compressor must be operated in a power-increased state to cope with the circulated amount of fluid. Further, as described above, the impeller shape of the centrifugal compressor is designed in accordance with the components and flow rate of the fluid at the designed point. Thus, when the components and flow rate of the fluid changes, the predetermined pressure increasing capacity may not be obtained. Accordingly, the application of a heat pump using a centrifugal compressor to a system in which the required heating temperature of the reboiler changes over a wide range is either difficult or cannot obtain the energy-saving effect expected for a heat pump distillation system.

In the same manner as the heat pump of Patent Literature 1, an indirect heat pump forms a heat pump cycle using a selected working fluid. A direct heat pump forms a heat pump cycle with a process fluid that serves as a working fluid and differs from an indirect heat pump.

### Solution to Problem

In a first aspect, a distillation device includes a batch type distillation column, a reboiler, a displacement compressor, a condenser, a distillate withdrawal portion, and a discharged liquid withdrawal portion. The reboiler heats liquid to vaporize the liquid into vapor. The liquid is a process fluid supplied to the distillation column. The displacement compressor draws in fluid for heating the liquid and increases the fluid in pressure and temperature, and supplies the fluid to the reboiler. The condenser condenses overhead vapor of the distillation column into a condensate. The distillate withdrawal portion removes the condensate. The discharged liquid withdrawal portion removes residual liquid from the distillation column. The fluid holds condensation heat of the overhead vapor, is increased in pressure and temperature by the compressor, and then transfers the condensation heat to the liquid and condenses in the reboilers. The compressor includes an actual volume flow rate regulation mechanism that varies an actual volume flow rate of the fluid, which is increased in pressure and temperature by the compressor, in accordance with a change in a required heating temperature of the reboiler during operation of the distillation device.

In a second aspect, in the distillation device according to the first aspect, the distillation column does not include trays or packings therein, and the distillation column performs simple distillation and does not include a reflux portion that returns the condensate to the distillation column.

In a third aspect, in the distillation device according to the first aspect, the distillation column is a rectification column that has trays or packings therein and includes a reflux portion that returns the condensate to the distillation column.

In a fourth aspect, in the distillation device according to any one of the first to third aspects, the actual volume flow rate regulation mechanism is of a step displacement control system.

In a fifth aspect, in the distillation device according to any one of the first to third aspects, the actual volume flow rate regulation mechanism is of a stepless displacement control system.

In a sixth aspect, in the distillation device according to any one of the first to fifth aspects, the fluid is a working fluid, the working fluid receives condensation heat of the overhead vapor condensed in the condenser, the working fluid that receives the condensation heat is increased in pressure and temperature by the compressor and condensed by the reboiler, the working fluid that is condensed is decreased in pressure by a pressure reducing valve and decreased in temperature, the working fluid that is pressure-decreased undergoes gas-liquid separation in a drum, and the distillation device includes an indirect heat pump mechanism that supplies a liquid portion of the working liquid that is gas-liquid separated to the condenser.

In a seventh aspect, in the distillation device according to any one of the first to fifth aspects, the fluid is the overhead vapor and increased in pressure and temperature by the compressor to then vaporize the liquid supplied to the distillation column in the reboiler, and the distillation device includes a direct heat pump mechanism that condenses the fluid, which is increased in pressure and temperature by the compressor, in the reboiler.

In an eighth aspect, in the distillation device according to the seventh aspect, the distillation column is a rectification column that has trays or packings therein and includes a reflux portion that returns the condensate condensed in the reboiler to the distillation column, and a pressure-reducing valve that decreases pressure of the condensate, which is condensed in the reboiler, and returns the condensate to the distillation column.

In a ninth aspect, a distillation method includes a supplying step of supplying a batch type distillation column with liquid; a pressure-temperature increasing step of drawing fluid for heating the liquid into a displacement compressor, increasing the fluid in pressure and temperature, and supplying the fluid to a reboiler; a heating step of exchanging heat in the reboiler between the liquid, which has been supplied to the distillation column, and the fluid, which has been increased in pressure and temperature, to heat the liquid and acquire overhead vapor and to condense the fluid, a condensing step of delivering the overhead vapor heated in the heating step to a condenser and condensing the overhead vapor into a condensate through heat exchange; a distillate removing step that removes the condensate; and a discharged liquid removing step that removes residual liquid from the distillation column. **In** the pressure-temperature increasing step, an actual volume flow rate of the fluid, which is increased in pressure and temperature by the compressor, is varied by an actual volume flow rate regulation mechanism in accordance with a change in a required heating temperature of the reboiler to distill the liquid with heat generated by a heat pump operated with a narrower temperature rising range.

In a distillation method of a tenth aspect, in the distillation method according to the ninth aspect, the distillation method is a simple distillation operation performed in the distillation column that does not include trays or packings therein and is free from a returning step of returning the condensate to the distillation column.

In a distillation method of an eleventh aspect, in the distillation method according to the ninth aspect, the distillation method is a rectification operation performed in the distillation column with trays or packings therein and includes a returning step of returning the condensate to the distillation column.

In a distillation method of a twelfth aspect, in the distillation method according to any one of the ninth to eleventh aspects, the actual volume flow rate regulation mechanism is of a step displacement control system.

In a distillation method of a thirteenth aspect, in the distillation method according to any one of the ninth to eleventh aspects, the actual volume flow rate regulation mechanism is of a stepless displacement control system.

In a distillation method of a fourteenth aspect, the distillation method according to any one of the ninth to thirteenth aspects includes an indirect heat pump mechanism in which the fluid is a working fluid, the working fluid receives condensation heat of the overhead vapor condensed by the condenser, the working fluid that receives the condensation heat is increased in pressure and temperature by the compressor, condensed by the reboiler, decreased in pressure by a pressure reducing valve and decreased in temperature, and a liquid portion obtained through gas-liquid separation in a drum is supplied to the condenser.

In a distillation method of a fifteenth aspect, the distillation method according to any one of the ninth to thirteenth aspects includes a direct heat pump mechanism in which the fluid is the overhead vapor and increased in pressure and temperature by the compressor to then vaporize the liquid supplied to the distillation column in the reboiler, and condense the fluid, which is increased in pressure and temperature by the compressor, in the reboiler.

In a distillation method of a sixteenth aspect, the distillation method according to the fifteenth aspect includes a pressure-decreasing step of decreasing pressure of a condensate of the fluid obtained by the reboiler, with a pressure reducing valve, and a returning step of returning the condensate after the pressure-decreasing step to the distillation column.

### Advantageous Effects of Invention

The distillation device in accordance with the present invention varies the actual volume flow rate of the fluid, which is increased in pressure and temperature by the compressor, in accordance with changes in the required heating temperature of the reboiler during operation of the distillation device in a preferred manner. By varying the actual volume flow rate of the fluid that is increased in pressure and temperature by the compressor in a preferred manner, the temperature pumping range at the heat pump may be minimized. This allows the required power for the compressor to be reduced.

### BRIEF DESCRIPTION OF DRAWINGS

Fig. 1 is a schematic diagram of a batch type distillation device including an indirect heat pump mechanism.
Fig. 2 is a schematic diagram of a batch type distillation device including a direct heat pump mechanism.
Fig. 3 is a schematic diagram illustrating temperature control executed by an actual volume flow rate regulation mechanism of a step displacement control system (e.g., unloader type).
Fig. 4 is a schematic diagram illustrating temperature control executed by an actual volume flow rate regulation mechanism of a stepless displacement control system.

### DESCRIPTION OF EMBODIMENTS

### First Embodiment

A distillation device in accordance with a first embodiment of the present invention will now be described.

The distillation device in accordance with the first embodiment is a batch type distillation device and includes an indirect heat pump mechanism.

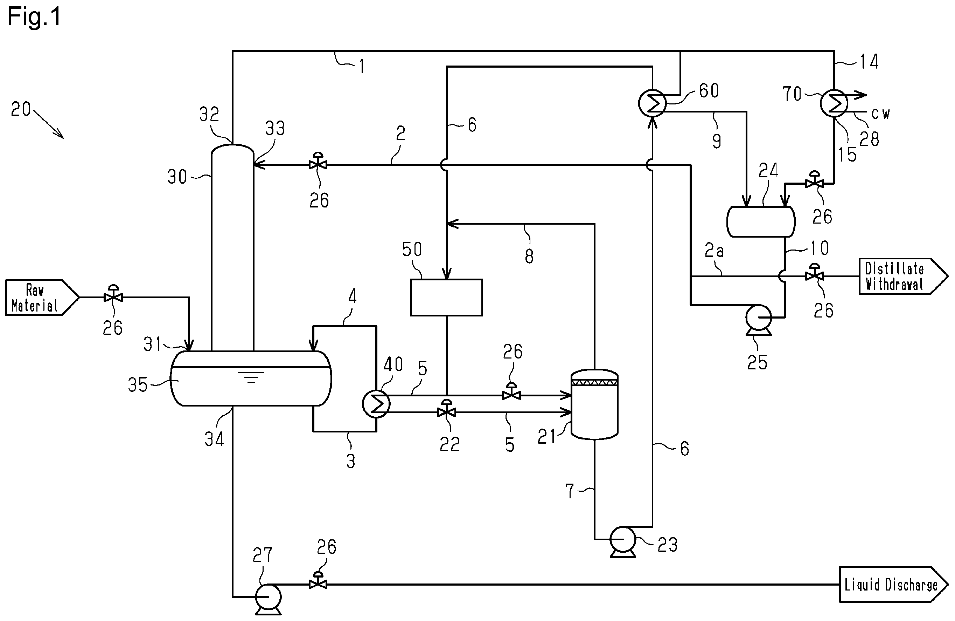

As shown in Fig. 1, a distillation device 20 includes a batch type distillation column 30 and a reboiler 40 that heats a liquid serving as raw material (process fluid) supplied to a distillation column 30. The process fluid is heated by a fluid (hereafter, referred to working fluid) that enters a displacement compressor 50, which increases the pressure and temperature of the working fluid and supplies the reboiler 40 with the working fluid. A condenser 60 condenses overhead vapor discharged from the overhead of the distillation column 30. A pressure reducing valve 22 reduces the pressure of the working fluid condensed by the reboiler 40. A distillate withdrawal portion 2a removes the process fluid, which is the condensate condensed by the condenser 60. The removal of the process fluid through the distillate withdrawal portion 2a is also referred to as distillation.

The process fluid, which is the subject of distillation, is not particularly limited and may be, for example, an aromatic hydrocarbon, an aliphatic hydrocarbon, alcohol, or the like. Further, the working fluid is not particularly limited and may be, for example, water, alcohol, or the like.

Each element of the distillation device 20 will now be described.

### Distillation Column 30

As shown in Fig. 1, the distillation column 30 includes a sump 35 that can contain a predetermined amount of the process fluid. The sump 35 is a container that is separate from the distillation column 30 and connected by a pipe or connected directly to the distillation column 30. The sump 35 includes a feed portion 31 that supplies the process fluid, which is raw material, to the distillation column 30. The distillation column 30 is a batch type distillation column that supplies raw material to the distillation column 30 and then performs distillation.

The distillation column 30 includes, at its overhead, an outlet 32 that discharges the process fluid vaporized in the distillation column. A pipe 1 (hereafter, referred to as the first pipe), which is in communication with the condenser 60, is connected to the outlet 32. The overhead of the distillation column 30 may also include a reflux portion 33 that returns the process fluid condensed by the condenser 60. A pipe 2 (hereafter, referred to as the second pipe), through which the condensate of the condenser 60 flows, is connected to the reflux portion 33.

When the distillation device 20 is a device that performs simple distillation, the reflux portion 33 may be omitted. In a device that performs rectification, the reflux portion 33 is included. Further, when the distillation device 20 is a device that performs simple distillation (simple distillation device), that is, when the distillation method is a simple distillation operation, the distillation column 30 does not have to include trays or packings therein. When the distillation device 20 is a device that performs rectification (rectification device), that is, when the distillation method is a rectification operation, it is preferred that the distillation column 30 (rectification column) include trays or packings therein. The packings are not particularly limited and may be known packings used for distillation devices.

The condenser 60 may be in the overhead of the distillation column 30, in which case the first pipe becomes unnecessary, and the outlet 32 may be arranged at a position located downward therefrom to discharge the condensed process fluid.

A pipe 3 (hereafter, referred to as the third pipe), which supplies the process fluid to the reboiler 40, is connected to the bottom section of the distillation column 30. A pipe 4 (hereafter, referred to as the fourth pipe), which returns the process fluid heated by the reboiler 40 to the distillation column 30, is connected to a portion located upward from the third pipe. Further, the bottom of the sump 35 includes a discharged liquid withdrawal portion 34 for removing the process fluid, which is residual liquid. The removal of the process fluid at the discharged liquid withdrawal portion 34 is also referred to as liquid discharge. The reboiler 40 may be included in the sump 35, and the discharged liquid withdrawal portion 34 may be arranged at a position located downward therefrom to discharge the process fluid. In this case the third and fourth pipes become unnecessary (i.e., third and fourth pipes omitted because a heat exchanger through which heating side fluid flows is inserted into or connected to sump 35).

### Reboiler 40

In the first embodiment, the reboiler 40 corresponds to a condenser of the heat pump cycle. As shown in Fig. 1, the reboiler 40 is connected by the third pipe and the fourth pipe to the distillation column 30. A pipe 5 (hereafter, referred to as the fifth pipe), which is in communication with the compressor 50, is connected to the reboiler 40. The end of the fifth pipe at the side opposite the compressor 50 is connected to a drum 21. The fifth pipe includes the pressure reducing valve 22 between the reboiler 40 and the drum 21. The reboiler 40 may be arranged in the bottom section of the distillation column 30, in which case the third pipe and the fourth pipe become unnecessary.

The reboiler 40 is supplied with the process fluid from the distillation column 30 through the third pipe or by gravitational force when the reboiler 40 is arranged inside the distillation column 30. The process fluid is heated by the working fluid supplied from the compressor 50 through the fifth pipe. That is, in the reboiler 40, heat is exchanged between the process fluid and the working fluid to heat the process fluid. The heated process fluid is returned to the distillation column 30 through the fourth pipe.

### Compressor 50

The compressor 50 is of a displacement type. A displacement type may be a reciprocating type, a screw type, or the like. A reciprocating type reciprocates a piston in a cylinder to compress the process fluid. A screw type rotates male and female screw rotors in a casing to compress the process fluid.

As shown in Fig. 1, a pipe 6 (hereafter, referred to as the sixth pipe), which is in communication with the condenser 60, is connected to the compressor 50. The end of the sixth pipe at the side opposite the compressor 50 is connected to a circulation pump 23. A pipe 7 (hereafter, referred to as the seventh pipe), which is in communication with the drum 21, is connected to the circulation pump 23.

A pipe 8 (hereafter, referred to as the eighth pipe), which is in communication with the drum 21, is connected to the sixth pipe between the compressor 50 and the condenser 60.

The compressor 50 includes an actual volume flow rate regulation mechanism that varies the actual volume flow rate of the working fluid, which is increased in pressure and temperature by the compressor 50, in accordance with changes in the required heating temperature of the reboiler 40 during operation of the distillation device 20. The actual volume flow rate regulation mechanism will be described in detail later.

### Condenser 60

In the first embodiment, the condenser 60 corresponds to an evaporator of the heat pump cycle.

As shown in Fig. 1, the first pipe is connected to the condenser 60. Further, the sixth pipe is connected to the condenser 60. A pipe 9 (hereafter, referred to as the ninth pipe), which is in communication with a drum 24, is also connected to the condenser 60. A pipe 10 (hereafter, referred to as the tenth pipe), which is in communication with a pump 25, is connected to the drum 24. The second pipe, which is in communication with the distillation column 30, is connected to the pump 25. The condenser 60 may be arranged in the overhead of the distillation column 30, in which case the first pipe, the ninth pipe, the drum 24, the tenth pipe, the pump 25, and the second pipe become unnecessary. (That is, a heat exchanger through which a cooling fluid flows is inserted into or connected to the overhead of the distillation column 30, in which case the first pipe, the ninth pipe, the drum 24, the tenth pipe, the pump 25, and the second pipe may be omitted).

The condenser 60 is supplied with the process fluid vaporized in the distillation column 30. The process fluid transfers heat to the working fluid supplied through the sixth pipe. This causes the process fluid to condense into a condensate. More specifically, heat is exchanged between the process fluid and the working fluid in the condenser 60 to condense the process fluid.

### Second Pipe and Distillate Withdrawal Portion 2a

As shown in Fig. 1, the second pipe is connected to the reflux portion 33 of the distillation column 30. The process fluid condensed by the condenser 60 is returned to the distillation column 30 through the ninth pipe, the drum 24, the tenth pipe, the pump 25, and the second pipe. Thus, the second pipe functions as a pipe for returning the condensate of the condenser 60 to the distillation column 30. Further, the second pipe includes the distillate withdrawal portion 2a that removes the condensate from the condenser 60. The distillate withdrawal portion 2a removes the distilled process fluid.

When the distillation device 20 is a device that performs simple distillation, the second pipe for returning the process fluid to the distillation column 30 may be omitted. In a device that performs rectification, the second pipe for returning the process fluid to the distillation column 30 is included.

When the condenser 60 is arranged in the overhead of the distillation column 30, the distillate withdrawal portion 2a may be arranged at a position located downward from the condenser 60 in the overhead of the distillation column 30.

### Trim Condenser 70

As shown in Fig. 1, a fourteenth pipe is connected to a trim condenser 70. Further, a fifteenth pipe, which is in communication with the drum 24, is connected to the trim condenser 70. A coolant pipe 28 is connected to the trim condenser 70. The trim condenser 70 absorbs the difference in heat load between a cooling unit and a condensing unit in a heat pump system to stabilize operation. Depending on the distillation system, instead of the trim condenser 70, a trim reboiler, which is a reboiler that uses an external heat source for heating, may be arranged in parallel to the reboiler 40.

The distillation device 20 includes the elements described above.

As shown in Fig. 1, the distillation device 20 of the first embodiment may also include control valves 26, a pump 27, or the like. The arrows added to each pipe indicate the circulation direction of the process fluid or the working fluid circulated through the pipe.

The indirect heat pump mechanism will now be described.

### Indirect Heat Pump Mechanism

As shown in Fig. 1, the working fluid flowing into the compressor 50 through the sixth pipe is increased in pressure and temperature by the compressor 50 and then supplied to the reboiler 40 through the fifth pipe. Here, the temperature of the working fluid, which is increased in pressure and temperature, is set to be higher than the temperature of the process fluid in the reboiler 40 to promote vaporization of the process fluid. The working fluid supplied to the reboiler 40 transfers heat to the process fluid and condenses in the reboiler 40.

More specifically, the working fluid holds the condensation heat of the overhead vapor. After the working fluid is increased in pressure and temperature by the compressor 50, the working fluid transfers the condensation heat to the process fluid and condenses in the reboiler 40.

The condensed working fluid is decreased in pressure when passing through the pressure reducing valve 22 in the fifth pipe and decreased in temperature. Part of the working fluid vaporizes depending on the condition. Further, the drum 21 performs gas-liquid separation to separate the vaporized part of the working fluid from the remaining part of the working fluid. The liquid part flows through the seventh pipe, the circulation pump 23, the sixth pipe, and into the condenser 60. The vaporized part of the working fluid is returned from the drum 21 through the eighth pipe and the sixth pipe to the compressor 50.

The condenser 60 is supplied with the process fluid vaporized in the distillation column 30. Here, the temperature of the working fluid is lower than the temperature of the process fluid and set to condense the process fluid. The process fluid supplied to the condenser 60 transfers heat to the working fluid and condenses into a condensate. In the condenser 60, the working fluid receives heat from the process fluid and vaporizes. The vaporized working fluid flows through the sixth pipe into the compressor 50 and is increased in pressure and temperature again to perform heating in the reboiler 40.

As described above, in the indirect heat pump mechanism, the process fluid is not directly increased in pressure and temperature by the compressor 50. The working fluid is heated and vaporized by the condenser 60 and then increased in pressure and temperature by the compressor 50. This heats the process fluid indirectly and condenses the working fluid. The pressure reducing valve 22 decreases the pressure of the condensed working fluid. This decreases the temperature of the working fluid. Part of the working fluid vaporizes depending on the condition. The drum 21 performs gas-liquid separation on the pressure-decreased working fluid. Then, the liquid part cools the process fluid at the condenser 60. This vaporizes the working fluid and distills the process fluid.

The actual volume flow rate regulation mechanism will now be described.

### Actual Volume Flow Rate Regulation Mechanism

The actual volume flow rate regulation mechanism of the displacement compressor 50 may be for a step displacement control system (e.g., step displacement control performed with unloader) or a stepless displacement control system.

The actual volume flow rate is a value obtained by dividing the actual intake gas mass flow rate of the compressor 50 by the gas density.

Each system will now be described in detail.

### Step Displacement Control System

The reciprocating type compressor 50 of the step displacement control system includes an intake valve unloader and a clearance pocket. The reciprocating type compressor 50 of the step displacement control system forcibly opens an intake valve plate of a cylinder so that the drawn in gas flows back toward the intake side. This hinders compression and regulates the flow rate. The regulation is performed in a stepped manner due to the opening and closing actions. Alternatively, a clearance pocket connected to a cylinder head or the like is opened or closed to vary the cylinder gap (clearance) volume. This changes the volume efficiency and regulates the flow rate. Such arrangements allow the intake flow rate of the working fluid to be controlled over a wider range than a centrifugal type compressor. Thus, in an indirect heat pump mechanism, the discharge pressure of the compressor 50 can be increased even if the actual volume flow rate is decreased when increasing the intake pressure of the working fluid in the compressor 50. More specifically, when the volume flow rate during initial operation is 100%, displacement control is performed in a stepped manner such as 75%, 50%, and 25%. This allows the discharge pressure to be increased in a stepped manner.

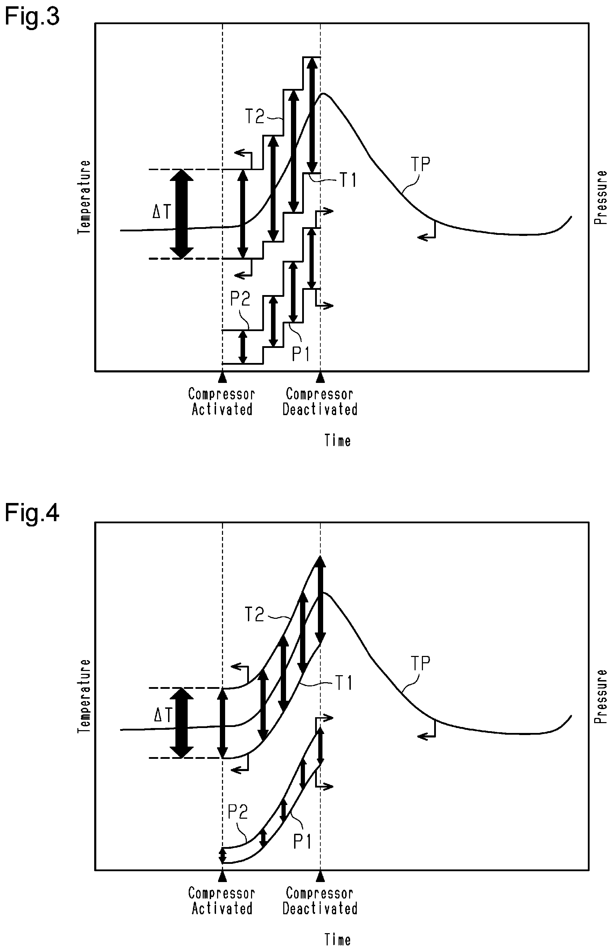

As shown in Fig. 3, in a batch type distillation device, as distillation progresses, a large amount of liquid that is unlikely to be vaporized, in other words, a large amount of liquid having a higher boiling point remains in the distillation column. Thus, as distillation progresses, the discharge pressure of the compressor 50 must be increased to set the heating temperature of the reboiler 40 to a temperature that is about the same as or higher than the temperature required for distillation as shown by solid line TP in Fig. 3.

In Fig. 3, the horizontal axis represents time, and the intake pressure P1 and the discharge pressure P2 of the compressor 50 are increased so that the heating temperature of the reboiler 40 is within a temperature rising range ΔT. Upon completion of the distillation, the compressor 50 is deactivated.

As shown in Fig. 3, when the step displacement control system includes the actual volume flow rate regulation mechanism, the actual volume flow rate of the working fluid, which is increased in pressure and temperature by the compressor 50, is varied in a stepped manner while maintaining the required temperature rising range ΔT. More specifically, the intake pressure P1 of the working fluid drawn into the compressor 50 is varied in a stepped manner, and the discharge pressure P2 of the working fluid discharged from the compressor 50 is varied in a stepped manner.

As a result, in accordance with changes in the heating temperature TP required for the reboiler 40, the temperature T1 of the working fluid drawn into the compressor 50 and the temperature T2 of the working fluid discharged from the compressor 50 are varied in a stepped manner. More specifically, the temperature T1 of the working fluid drawn into the compressor 50 and the temperature T2 of the working fluid discharged from the compressor 50 are increased in a stepped manner. This allows the pressure and temperature to be increased while controlling the temperature of the working fluid in a preferred manner. Thus, liquid can be distilled with heat generated by a heat pump operated with the temperature rising range ΔT that is narrower than a heat pump distillation system using a centrifugal compressor. There is no particular limitation to the narrower temperature rising range ΔT. The vaporization temperature of the process fluid in the reboiler 40, and the condensing temperature of the process fluid in the condenser 50 may both be TP. In an indirect heat pump to which a centrifugal compressor is applied, when TP becomes minimal, the temperature difference required for heat exchange at the condenser so that the working fluid receives heat from the process fluid and vaporizes is, for example, 10°C. In the same manner, when TP becomes maximal, the temperature difference required for heat exchange at the reboiler so that the working fluid transfers heat to the process fluid and condenses is, for example, 10°C. Accordingly, the temperature rising range ΔT is the sum of 20°C and the difference between the minimum value and the maximum value of TP. When the difference between the minimum value and the maximum value of TP is 50°C, the temperature rising range ΔT is 70°C. In an indirect heat pump to which a displacement compressor of a step displacement control system is applied, the temperature difference required for heat exchange is provided during the time, indicated by T1 and T2 in Fig. 3, of each of the four steps in which displacement is controlled. Accordingly, if the difference between the minimum value and maximum value of TP during the time of each step is, for example, 15°C, the temperature rising range ΔT is 35°C.

### Stepless Displacement Control System

The compressor 50 of the stepless displacement control system controls the intake amount of the working fluid in a stepless manner. Specific examples of the wireless displacement control system include, for example, a reciprocating type compressor of a stepless displacement control system manufactured by Hoerbiger (product name: HydroCOM), a screw type compressor of a stepless displacement control system using a slide valve, and the like.

As shown in Fig. 4, when the stepless displacement control system includes the actual volume flow rate regulation mechanism, the actual volume flow rate of the working fluid, which is increased in pressure and temperature by the compressor 50, can be varied in a continuous manner in a state in which the compression ratio of the compressor 50 is constant. More specifically, the intake pressure P1 of the working fluid flowing into the compressor 50 is varied in a continuous manner, and the discharge pressure P2 of the working fluid discharged from the compressor 50 is varied in a continuous manner.

As a result, in accordance with changes in the heating temperature TP required for the reboiler 40, the temperature T1 of the working fluid flowing into the compressor 50 and the temperature T2 of the working fluid discharged from the compressor 50 are varied in a continuous manner. More specifically, the temperature T1 of the working fluid flowing into the compressor 50 and the temperature T2 of the working fluid discharged from the compressor 50 are increased in a continuous manner. This allows the pressure and temperature to be increased while controlling the temperature of the working fluid in a preferred manner. Thus, liquid can be distilled with heat generated by a heat pump operated with the temperature rising range ΔT that is narrower than a heat pump distillation system using a centrifugal compressor. There is particularly no limitation to the narrower temperature rising range ΔT. When the process fluid temperature behavior is similar to the example of the heat pump related to the step displacement control, the temperature of the working fluid is controlled in a continuous manner in accordance with the temperature of the process fluid as indicated by T1 and T2 in Fig. 4. Thus, the temperature rising range ΔT is the temperature difference required for heat exchange and may be, for example, 20°C.

A distillation method using the distillation device 20 will now be described.

### Distillation Method

The distillation method includes a supplying step, a pressure-temperature increasing step, a distilling side heating step (condensing step in heat pump cycle (also referred to as heat pump cycle side condensing step)), a pressure-decreasing step, a distilling side condensing step (vaporizing step in heat pump cycle), a distillate removing step, and a discharged liquid removing step. Further, a returning step may be performed after the condensing step. When used with an indirect heat pump mechanism, the pressure-decreasing step may be performed after the heating step (also referred to as heat pump cycle side condensing step). When used with a direct heat pump mechanism and the returning step is performed, the returning step may be performed after the pressure-decreasing step.

The supplying step supplies the batch type distillation column 30 with the process fluid.

The pressure-temperature increasing step has the working fluid flow into the displacement compressor 50 to increase the pressure and temperature of the working fluid, which is then supplied to the reboiler 40.

The distilling side heating step (heat pump cycle side condensing step) exchanges heat in the reboiler 40 between the process fluid supplied from the distillation column 30 and the working fluid of which the pressure and temperature has been increased. Further, the process fluid is heated and returned to the distillation column 30, and the working fluid is condensed.

The pressure-decreasing step decreases the pressure of the working fluid, which has been condensed in the distilling side heating step (heat pump cycle side condensing step), with the pressure reducing valve 22. The pressure-decreased working fluid is decreased in temperature, and part of the working fluid is vaporized depending on the condition.

The condensing step (vaporizing step in heat pump cycle) delivers the overhead vapor of the distillation column 30, which is heated in the heating step (heat pump cycle side condensing step), to the condenser 60. Further, this step exchanges heat to condense vapor into condensate. Heat is exchanged with the working fluid delivered to the condenser 60.

The returning step returns the process fluid, which has undergone the distilling side condensing step (vaporizing step in heat pump cycle), to the distillation column 30.

The distillate removing step removes the condensate, which has been condensed in the distilling side condensing step (vaporizing step in heat pump cycle), from the distillate withdrawal portion 2a.

The discharged liquid removing step removes the residual liquid from the distillation column 30 through the discharged liquid withdrawal portion 34.

Distillation is performed through the steps described above. The order of the steps may be changed.

### Second Embodiment

A distillation device 20 in accordance with a second embodiment of the present invention will now be described.

The distillation device 20 in accordance with the second embodiment is a batch type distillation device and includes a direct heat pump mechanism. Components that are the same as the corresponding components of the distillation device 20 in accordance with the first embodiment will not be described in detail.

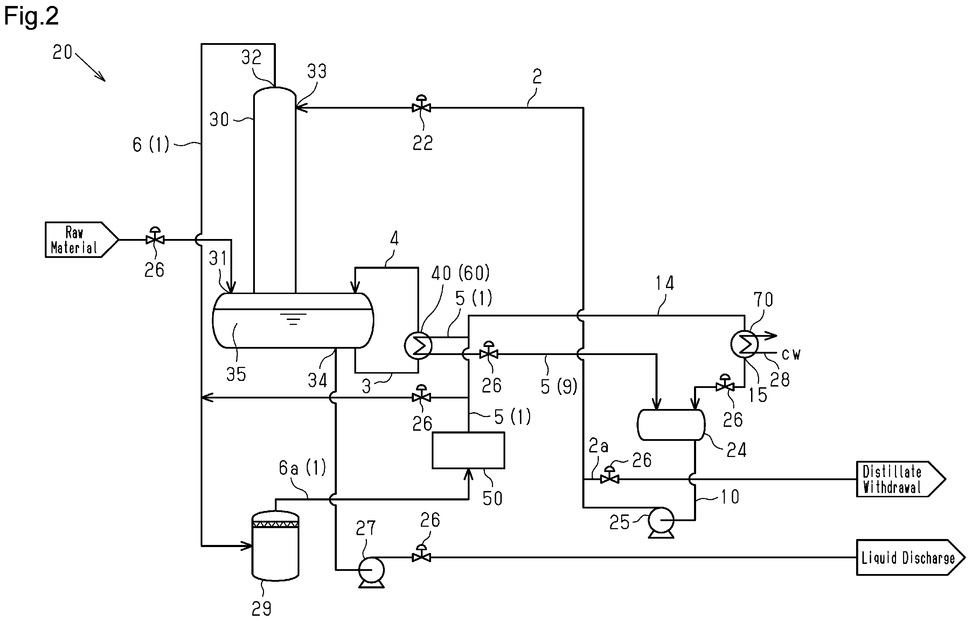

As shown in Fig. 2, the distillation device 20 includes the batch type distillation column 30 and the reboiler 40 that heats the process fluid supplied to the distillation column 30. The reboiler 40 also functions as the condenser 60. Further, the displacement compressor 50 increases the pressure and temperature of the drawn in process fluid and supplies it to the reboiler 40 (condenser 60). In the same manner as the compressor 50 of the first embodiment, the compressor 50 includes the actual volume flow rate regulation mechanism.

Further, the distillation device 20 includes the trim condenser 70 to condense the part of the vapor discharged from the distillation column 30 that is increased in pressure and temperature by the compressor 50. The distillate withdrawal portion 2a removes the process fluid condensed by the reboiler 40 (condenser 60) and the trim condenser 70. The second pipe may be used to return the process fluid condensed by the reboiler 40 (condenser 60) and the trim condenser 70 to the distillation column 30. The second pipe includes the pressure reducing valve 22 between the drum 24 and the distillation column 30.

As shown in Fig. 2, the distillation column 30 includes, at its overhead, the outlet 32 that discharges the process fluid vaporized in the distillation column 30. The outlet 32 is connected to a pipe 6(1) (hereafter, referred as the sixth pipe 6(1)), which is in communication with a drum 29. The drum 29 removes liquid droplets, which may be generated by an unexpected decrease in temperature or unexpected increase in pressure, from vapor.

A pipe 6a(1) (hereafter, referred to as the sixth pipe 6a(1)) is connected to the drum 29. The end of the sixth pipe 6a(1) at the side opposite the drum 29 is connected to the compressor 50. A pipe 5(1) (hereafter, referred to as the fifth pipe 5(1)) is connected to the compressor 50. The fifth pipe 5(1) is connected to the reboiler 40 (condenser 60). The reboiler 40 (condenser 60) is connected to the drum 24 through a pipe 5(9) (hereafter, referred to as fifth pipe 5(9)). The fifth pipe 5(9) includes a control valve 26 between the reboiler 40 (condenser 60) and the drum 24.

A pipe 14 (hereafter, referred to as the fourteenth pipe) is connected to the fifth pipe 5(1) between the compressor 50 and the reboiler 40 (condenser 60). The fourteenth pipe is connected to the trim condenser 70. A pipe 15 (hereafter, referred to as the fifteenth pipe), which is in communication with the drum 24, is connected to the trim condenser 70. The coolant pipe 28 is connected to the trim condenser 70.

The direct heat pump mechanism will now be described.

### Direct Heat Pump Mechanism

As shown in Fig. 2, the process fluid vaporized in the distillation column 30 flows through the sixth pipe 6(1) into the drum 29. The process fluid further flows through the sixth pipe 6a(1) into the compressor 50. The process fluid is increased in pressure and temperature by the compressor 50 and then supplied through the fifth pipe 5(1) to the reboiler 40 (condenser 60).

The process fluid supplied to the reboiler 40 (condenser 60) has a higher temperature than the process fluid inside the reboiler 40 (condenser 60) and is set to promote vaporization of the process fluid. The process fluid entering the reboiler 40 (condenser 60) transfers heat to the process fluid and condenses inside the reboiler 40 (condenser 60). More specifically, in the reboiler 40 (condenser 60), heat is exchanged between the process fluids. This heats the process fluid inside the distillation column. The condensed process fluid is supplied to the drum 24. The portion of the process fluid increased in pressure and temperature by the compressor 50 and not supplied to the reboiler 40 (condenser 60) is supplied through the fourteenth pipe to the trim condenser 70. The trim condenser 70 is supplied with coolant. Thus, the process fluid supplied through the fourteenth pipe to the trim condenser 70 transfers heat to the coolant and condenses. The process fluid is further supplied through the fifteenth pipe to the drum 24. The process fluid supplied to the drum 24 is removed through the tenth pipe, the pump 25, and the distillate withdrawal portion 2a. When the distillation device 20 in accordance with the second embodiment is a rectification device including the reflux portion 33, the process fluid supplied to the drum 24 flows through the second pipe back to the distillation column 30. When returning the process fluid, the second pipe includes the pressure reducing valve 22. The pressure reducing valve 22 decreases the pressure of the process fluid that is returned. This decreases the temperature of the process fluid. Part of the working fluid vaporizes depending on the condition.

As described above, the direct heat pump mechanism uses part of the process fluid as the working fluid. Part of the process fluid is increased in pressure and temperature by the compressor 50 to heat the process fluid in the distillation column 30 and distill the process fluid.

In the direct heat pump mechanism, part of the process fluid is used as the working fluid. This changes the properties of the working fluid as distillation progresses. Thus, with the centrifugal compressor, it is difficult to change the flow rate of the fluid increased in pressure and temperature by the compressor 50 in accordance with changes in the required heating temperature of the reboiler 40 (condenser 60).

The compressor 50 of the distillation device 20 in accordance with the second embodiment also includes the actual volume flow rate regulation mechanism. Thus, during operation of the distillation device 20, the actual volume flow rate of the process fluid flowing into the compressor 50 can be varied in accordance with the required heating temperature TP of the reboiler 40 (condenser 60). In the distillation device 20 in accordance with the second embodiment, from the aspect of the process fluid, the functions of the reboiler 40 and the condenser 60 are combined. Thus, in the same manner as the first embodiment, in the condenser 60, the working fluid receives heat from the process fluid and vaporizes. Further, the working fluid is increased in pressure and temperature. In the reboiler 40, heat is transferred to the process fluid, and the working fluid is condensed. Among these actions, two of the actions for exchanging heat between the process fluid and the working fluid are combined into a single action. Accordingly, the temperature rising range ΔT is the sum of the temperature change in the process fluid and the temperature difference required for heat exchange that is, for example, 10°C, which would be 10°C each for two locations thus totaling to 20°C in an indirect type.

Accordingly, in a direct heat pump mechanism to which a displacement compressor of a step displacement control system is applied, if the difference between the minimum value and maximum value of TP during the time of each step in which displacement is controlled is, for example, 15°C, the temperature rising range ΔT is 25°C. Further, in a direct heat pump mechanism to which a displacement compressor of a stepless displacement control system is applied, for example, the temperature rising range is 10°C.

The distillation device 20 in accordance with the second embodiment can perform distillation in the same manner as the distillation method of the distillation device 20 in accordance with the first embodiment. When the distillation device 20 in accordance with the second embodiment is free from the returning step, the pressure-decreasing step is also not included.

### Operation and Advantages of Present Embodiment

The operation and advantages of the first embodiment and the second embodiment will now be described.
(1) The distillation column 30 is the batch type distillation column 30. The compressor 50 includes the actual volume flow rate regulation mechanism that varies the actual volume flow rate of the working fluid, which is increased in pressure and temperature by the compressor 50, in accordance with changes in the required heating temperature TP of the reboiler 40 during operation of the distillation device 20.

Accordingly, the intake pressure P1 of the working fluid flowing into the compressor 50 and the discharge pressure P2 of the working fluid discharged from the compressor 50 can be varied. This allows the discharge temperature T2 of the working fluid discharged from the compressor 50 to be varied in accordance with changes in the heating temperature TP required for the reboiler 40. The pressure and temperature of the working fluid can be increased while controlling the temperature T2 of the working fluid in a preferred manner. Thus, liquid can be distilled with heat generated by the heat pump operated with the temperature rising range ΔT that is narrower than a heat pump distillation system using a centrifugal compressor.

The temperature pumping range at the heat pump can be minimized. This allows the required power for the compressor 50 to be reduced and saves energy.

(2) The actual volume flow rate regulation mechanism is of a step displacement control system. This allows the working fluid to be increased in pressure and temperature while controlling the temperature in steps in a preferred manner.

(3) The actual volume flow rate regulation mechanism is of a stepless displacement control system. This allows the working fluid to be increased in pressure and temperature while controlling the temperature continuously in a preferred manner.
(4) The distillation device 20 includes the indirect heat pump mechanism. Accordingly, the actual volume flow rate of the working fluid, which is increased in pressure and temperature by the compressor 50 in the indirect heat pump mechanism, can be varied in a preferred manner.

(5) The distillation device 20 includes the direct heat pump mechanism. Accordingly, the actual volume flow rate of the working fluid, which is increased in pressure and temperature by the compressor 50 in the direct heat pump mechanism, can be varied in a preferred manner.

### Modified Examples

The present embodiment may be modified as described below. The present embodiment and the following modifications can be combined as long as there is technical consistency.

The distillation device may include the indirect heat pump mechanism or the direction heat pump mechanism.

In the present embodiment, the distillation device 20 includes the drum 21, the pressure reducing valve 22, the circulation pump 23, the drum 24, the pump 25, the control valves 26, the pump 27, the trim condenser 70, and the like. At least some of these elements may be omitted. Further, these elements may be set at locations other than those indicated in Figs. 1 and 2.

In the distillation device 20 in accordance with the present embodiment, the coolant pipe 28 is connected to the trim condenser 70. This, however, is not a limitation. The trim condenser 70 may use a cooling means other than water to condense the process fluid. A cooling means other than coolant may be, for example, air current or a refrigerant. In the distillation device 20 in accordance with the first embodiment, the trim condenser 70 may include a cooling means using a coolant, air current, or a refrigerant.

In the indirect heat pump mechanism of the first embodiment, the fifth pipe connecting the compressor 50 and the drum 21 does not have to extend via the reboiler 40 (corresponding to cooler of heat pump device). The compressor 50 and the drum 21 may be connected by a kickback pipe.

In the direct heat pump mechanism of the second embodiment, a kickback pipe connecting the compressor 50 and the drum 29 may be connected between the fifth pipe 5(1), which connects the compressor 50 and the drum 24, and the sixth pipe 6(1), which connects the distillation column 30 and the drum 29.

### REFERENCE SIGNS LIST

2) second pipe, 2a) distillate withdrawal portion, 20) distillation device, 30) distillation column, 40) reboiler, 50) compressor, 60) condenser.

## Claims

1. A distillation device, comprising:
a batch type distillation column;
a reboiler that heats and vaporizes liquid into vapor, the liquid being a process fluid supplied to the distillation column;
a displacement compressor that draws in fluid for heating the liquid and increases the fluid in pressure and temperature, and supplies the fluid to the reboiler;
a condenser that condenses overhead vapor of the distillation column into a condensate;
a distillate withdrawal portion that removes the condensate; and
a discharged liquid withdrawal portion that removes residual liquid from the distillation column, wherein
the fluid holds condensation heat of the overhead vapor, is increased in pressure and temperature by the compressor, and then transfers the condensation heat to the liquid and condenses in the reboiler, and
the compressor includes an actual volume flow rate regulation mechanism that varies an actual volume flow rate of the fluid, which is increased in pressure and temperature by the compressor, in accordance with a change in a required heating temperature of the reboiler during operation of the distillation device.

2. The distillation device according to claim 1, wherein the distillation column does not include trays or packings therein, and the distillation column performs simple distillation and does not include a reflux portion that returns the condensate to the distillation column.

3. The distillation device according to claim 1, wherein the distillation column is a rectification column that has trays or packings therein and includes a reflux portion that returns the condensate to the distillation column.

4. The distillation device according to claim 1, wherein the actual volume flow rate regulation mechanism is of a step displacement control system.

5. The distillation device according to claim 1, wherein the actual volume flow rate regulation mechanism is of a stepless displacement control system.

6. The distillation device according to claim 1, comprising an indirect heat pump mechanism, wherein the fluid is a working fluid, the working fluid receives condensation heat of the overhead vapor condensed in the condenser, the working fluid that receives the condensation heat is increased in pressure and temperature by the compressor and condensed by the reboiler, the working fluid that is condensed is decreased in pressure by a pressure reducing valve and decreased in temperature, the working fluid that is pressure-decreased undergoes gas-liquid separation in a drum, and a liquid portion of the working liquid, which is gas-liquid separated, is supplied to the condenser.

7. The distillation device according to claim 1, wherein
the fluid is the overhead vapor and increased in pressure and temperature by the compressor to then vaporize the liquid supplied to the distillation column in the reboiler, and
the distillation device includes a direct heat pump mechanism that condenses the fluid, which is increased in pressure and temperature by the compressor, in the reboiler.

8. The distillation device according to claim 7, wherein the distillation column is a rectification column that has trays or packings therein and includes a reflux portion that returns the condensate condensed in the reboiler to the distillation column, and a pressure-reducing valve that decreases pressure of the condensate, which is condensed in the reboiler, and returns the condensate to the distillation column.

9. A distillation method, comprising:
a supplying step of supplying a batch type distillation column with liquid;
a pressure-temperature increasing step of drawing fluid for heating the liquid into a displacement compressor, increasing the fluid in pressure and temperature, and supplying the fluid to a reboiler;
a heating step of exchanging heat in the reboiler between the liquid, which has been supplied to the distillation column, and the fluid, which has been increased in pressure and temperature, to heat the liquid and acquire overhead vapor and to condense the fluid;
a condensing step of delivering the overhead vapor heated in the heating step to a condenser and condensing the overhead vapor into a condensate through heat exchange;
a distillate removing step that removes the condensate; and
a discharged liquid removing step that removes residual liquid from the distillation column,
wherein in the pressure-temperature increasing step, an actual volume flow rate of the fluid, which is increased in pressure and temperature by the compressor, is varied by an actual volume flow rate regulation mechanism in accordance with a change in a required heating temperature of the reboiler to distill the liquid with heat generated by a heat pump operated with a narrower temperature rising range.

10. The distillation method according to claim 9, wherein the distillation method is a simple distillation operation performed in the distillation column that does not include trays or packings therein and is free from a returning step of returning the condensate to the distillation column.

11. The distillation method according to claim 9, wherein the distillation method is a rectification operation performed in the distillation column with trays or packings therein and includes a returning step of returning the condensate to the distillation column.

12. The distillation method according to claim 9, wherein the actual volume flow rate regulation mechanism is of a step displacement control system.

13. The distillation method according to claim 9, wherein the actual volume flow rate regulation mechanism is of a stepless displacement control system.

14. The distillation method according to claim 9, comprising an indirect heat pump mechanism in which the fluid is a working fluid, the working fluid receives condensation heat of the overhead vapor condensed in the condenser, the working fluid that receives the condensation heat is increased in pressure and temperature by the compressor, condensed by the reboiler, decreased in pressure by a pressure reducing valve and decreased in temperature, and a liquid portion obtained through gas-liquid separation in a drum is supplied to the condenser.

15. The distillation method according to claim 9, comprising a direct heat pump mechanism in which the fluid is the overhead vapor and increased in pressure and temperature by the compressor to then vaporize the liquid supplied to the distillation column in the reboiler, and condense the fluid, which is increased in pressure and temperature by the compressor, in the reboiler.

16. The distillation method according to claim 15, comprising a pressure-decreasing step of decreasing pressure of a condensate of the fluid obtained by the reboiler, with a pressure reducing valve, and a returning step of returning the condensate after the pressure-decreasing step to the distillation column.
